Europäisches Patentamt

European Patent Office

Office européen des brevets

(19)

(11) Publication number: **0 079 178**
A1

# (12) EUROPEAN PATENT APPLICATION

(21) Application number: 82305746.8

(22) Date of filing: 28.10.82

(51) Int. Cl.³: **C 09 J 3/14**
B 32 B 7/12, B 32 B 27/32
B 32 B 7/02, C 08 L 23/08
C 08 L 33/00

(30) Priority: 29.10.81 GB 8132626

(43) Date of publication of application:
18.05.83 Bulletin 83/20

(84) Designated Contracting States:
AT BE CH DE FR IT LI NL SE

(71) Applicant: N.V. RAYCHEM S.A.
Diestsesteenweg 692
B-3200 Kessel-lo(BE)

(72) Inventor: Overbergh, Noel Marcel Michiel
Corbielaan 20
B-3060 Bertem(BE)

(72) Inventor: Vansant, Jan
Nieuwstraat 14
3030 Heverlee(BE)

(72) Inventor: Doucet, Jos
Grensstraat 95
B-3200 Kessel-Lo(BE)

(74) Representative: Benson, John Everett et al,
Raychem Limited Morley House 26 Holborn Viaduct
London EC1(GB)

(54) Hot melt adhesive.

(57) A hot-melt adhesive composition comprises a mixture of:

(a) a copolymer of ethylene, an $\alpha,\beta$-unsaturated carboxylic acid and/or an alkyl ester thereof and, if the copolymer contains no units of the said alkyl ester, vinyl acetate, provided that if the copolymer contains vinyl acetate units it has a melt index of not more than 400; and

(b) a copolymer of ethylene and an unsaturated carboxylic acid which copolymer has an acid number of at least 4.

The adhesive compositions exhibit good adhesion particularly to polyolefin substrates e.g. polyethylene without the necessity of oxidative surface treatment of the substrate surface such as by flame brushing.

COMPLETE DOCUMENT

This invention relates to adhesives and especially to hot-melt adhesives.

Hot-melt adhesives based on ethylene copolymers have been widely used in a number of fields by virtue of their reasonably good bonding characteristics and their low cost. However some polymeric surfaces and especially surfaces of materials formed from polyethylene, are extremely difficult to bond to and accordingly require treatment before a satisfactory bond may be formed. Often such surface treatment may include etching in a chromic acid bath and/or surface oxidation either by corona discharge or by flame brushing, but where the nature of the article is such that the bond must be formed in the field, only a limited number of surface treatment operations can be performed immediately prior to bonding, such as abrading, solvent degreasing and flame brushing the surface. For this reason the quality of the bonds formed may, in a number of cases, be poor and is highly dependent on the workman's skill and care.

The present invention provides a hot-melt adhesive composition which comprises a mixture of:

(a) a copolymer of ethylene, an $\alpha,\beta$-unsaturated carboxylic acid and/or an alkyl ester thereof and, if the copolymer contains no units of the said alkyl ester, vinyl acetate, provided that if the copolymer contains vinyl acetate units it has a melt index of not more than 400; and

(b) a copolymer of ethylene and an unsaturated carboxylic acid, which copolymer has an acid number of at least 4.

As will be appreciated from the definition of component (a), the term "copolymer" includes polymers formed from three or more comonomers. The copolymers may include additional units derived from comonomers other than those mentioned provided that any such comonomers are present only in minor quantities and do not significantly affect the properties of the polymers.

It has been found that adhesive compositions according to the invention exhibit considerably improved adhesion to polyethylene substrates which have been prepared only by light abrasion and solvent wiping as compared with the individual components and, surprizingly, certain compositions exhibit adhesion to polyethylene substrates that have been prepared in this manner that is significantly greater than their adhesion to polyethylene substrates that have been flame brushed in addition to being abraded and solvent wiped, thereby obviating many or all the surface treatment steps that oxidize the surface such as flame brushing and corona discharge, and making the quality of the resulting bond less sensitive to the workman's skill. In addition to increased bond strengths, some adhesive compositions according to the invention show an increased tendency to fail in the cohesive mode (i.e. with adhesive adhering to both substrate surfaces after failure) rather than in the adhesive mode (i.e. at one adhesive/substrate interface) when stressed to failure. As will be appreciated, cohesive failure of an adhesive bond is preferred to adhesive failure because if a bond fails in the adhesive mode, it is impossible to ascertain from subsequent inspection of the bond whether the bond was satisfactory or whether it was incorrectly prepared.

Preferably the $\alpha,\beta$-unsaturated carboxylic acid of component (a) is acrylic acid. The alkyl ester of the $\alpha,\beta$-unsaturated acid is preferably a $C_1$-$C_6$ alkyl ester, more preferably a $C_2$-$C_4$ alkyl ester and especially a butyl ester. Preferably the copolymer of component (a) has a melt index of not more than 400 whether or not it includes vinyl acetate. If the copolymer forming component (a) includes vinyl acetate units, it preferably has a melt index of not more than 300 and especially not more than 200 but preferably at least 0.5 and especially at least 3. These melt index limits are also preferred for copolymers of component (a) that do not include units based on vinyl acetate. The most preferred copolymers forming component (a) are ethylene/vinyl acetate/ acrylic acid terpolymers, preferably having a vinyl acetate content of from 20 to 30% by weight, ethylene/butyl acrylate copolymers, and ethylene/butyl acrylate/acrylic acid terpolymers. The total quantity of $\alpha,\beta$ -unsaturated carboxylic acid and/or alkyl ester thereof in the copolymer of component (a) (referred to below as the "acrylic cntent") is preferably at least 0.5% by weight based on the total weight of the copolymer of component (a). The acrylic content may range up to 50% or even higher although there is usually no advantage in this, and acrylic contents of up to 30% e.g. up to 20% or less for instance up to 10% are usually sufficient.

The ethylene/acrylic acid copolymer of component (b) preferably has an acid number of at least 20, more preferably at least 40, e.g. at least 60, especially at least 70 and most especially at least 100 but preferably not more than 200 and most preferably not more than 150, the acid number being expressed as the number of milligrammes of potassium hydroxide per gramme of polymer, and a number average molecular weight of not more than 60,000, more preferably not more than 20,000, e.g. not more than 10,000, especially not more than 5,000 and most especially not more than 4,000, but preferably at least 500 and especially at least 2,000. The unsaturated carboxylic acid is preferably a monocarboxylic acid of up to 6 carbon atoms or a dicarboxylic acid of up to 8 carbon atoms, e.g. acrylic acid, methacrylic acid, crotonic acid, maleic acid or fumaric acid, especially acrylic acid. These copolymers and their preparation are described in U.S. Patent No. 3,658,741, the disclosure of which is incorporated herein by reference.

Component (b) is preferably present in an amount of from 2 to 50% by weight, especially from 5 to 30% and most especially from 5 to 20% by weight, based on the total weight of (a) and (b).

The adhesive compositions according to the invention may, if desired, include one or more additives usually employed in adhesive materials, such as tackifiers, fillers, antioxidants, stabilisers, extenders, fungicides and the like. As tackifiers there may be mentioned natural rosins, hydrogenated rosins, polyterpenes and hydrocarbon resins e.g. polybutenes. Suitable fillers include titanium dioxide, diatomaceous earth and calcium carbonate. Other thermoplastic materials may alos be incorporated in the composition e.g. olefn homo and copolymers such as polyethylene, ethylene propylene rubber, ethylene vinyl acetate copolymer and the like, preferably in amounts of not more than 50% by weight and especially not more than 30% by weight based on the total weight of components (a) and (b).

The compositions may be prepared simply by blending the required components and any additives at an elevated temperature, e.g. about 100-150°C until homogeneous. The components may be blended for example in a 2 roll mill, a sigma blade mixer or in the barrel of an extruder. Blending times of about 15 to 20 minutes have been found to be satisfactory in practice.

The adhesive compositions according to the invention may be used with advantage in a number of cases where two substrates are bonded together. The adhesives exhibit a number of properties that are advantageous for certain applications, e.g. relatively low flow temperature and good low temperature impact and flexibility, and especially good adhesion to non-polar polyolefin substrates such as polyethylene.

One application for which the adhesive compositions according to the present invention are particularly useful is in connection with dimensionally heat-recoverable articles since such articles, or the substrates to which they are required to be bonded, are often formed predomanently from polyethylene or ethylene copolymers. Thus, according to another aspect, the invention provides a dimensionally heat-recoverable article which has a coat of an adhesive composition according to the invention on at least part of a surface thereof.  Examples of such dimensionally heat-recoverable articles include heat-recoverable sleeves and end-caps for jointing and termination of electrical cables or other equipment, and insulation, and corrosion protection of service lines such as oil pipes.  Other heat-recoverable articles to which the adhesives of the present invention may advantageously be applied include so-called "wrap-around" sleeves as described, for example, in U.S. Patent No. 3,379,218 and British Patent Nos. 1,155,470, 1,211,988 and 1,346,479, and the "XAGA" cable splice described in British Patent No. 1,431,167.  However, the adhesives may, of course, be used in other applications not involving heat-recoverable products.

The  following  Examples  illustrate  the  invention:

EXAMPLE 1

100 parts by weight of each of three ethylene copolymers were blended for 15-20 minutes on a sigma blade mixer at 130   15°C with 20 parts by weight of an ethylene/acrylic acid copolymer having a number average molecular weight of 3500 and an acid number of 120 sold by the Allied Chemical Corporation under the trade name AC 5120.

In order to measure the peel strength of the blends, a sample of each blend was coated on a 25mm wide polyethylene strip that had previously been abraded and wiped with a solvent, and the strip was then wrapped around a test drum of 25mm diameter and 25mm axial length having a circumferential surface of polyethylene that had also previously been abraded and wiped with a solvent. The test drum was then left in an oven at 150°C for 20 minutes and subsequently cooled to form the bond. No cleaning of the polyethylene surfaces other than abrasion or solvent wiping, was performed prior to forming the bond and surfaces prepared in this was are termed "untreated".

The drum was then mounted with its axis horizontal and so that it was freely rotatable. The strip was pulled off at a rate of 50 ± 5mm per minute, and the force required to pull the strip off was recorded as the peel strength.

The test was repeated, where the surfaces are indicated below as "treated", using polyethylene surfaces that had been prepared by the additional step of "flame brushing" to form oxidized species on the surface.

The result of the peel strengths are shown in Table I.

<div style="text-align: center;">TABLE I</div>

| SAMPLE | Ethylene Copolymer | Parts by Wt of AC5120 | Peel Strength at Room Temp to untreated Polyethylene (N/25mm) | Failure mode (% cohesive failure) |
|--------|--------------------|-----------------------|-------------------------------------------------------------|-----------------------------------|
| A  | ELVAX 4320[1]   | 20          | 289       | 50  |
| A' | "               | 0 (Control) | 105       | 0   |
| B  | DXM 410[2]      | 20          | 292       | 100 |
| B' | "               | 0 (Control) | 155 - 230 | 0   |
| C  | Lupolene A2910M[3] | 20       | 218       | 0   |
| C' | "               | 0 (Control) | 46        | 0   |

1) ELVAX 4320 (DuPont trade name) is an ethylene/vinyl acetate/acrylic acid terpolymer of melt index 125 - 175.

2) DXM410 (Unifos trade name) is an ethylene/butyl acrylate copolymer.

3) Lupolene A2910M (BASF trade name) is an ethylene/ butyl acrylate/acrylic acid terpolymer.

EXAMPLE 2

Hot-melt adhesives based on Elvax 4320 ethylene/vinyl acetate/acrylic acid copolymer were prepared by blending the components shown in Table II on a sigma blade mixer until a homogeneous mixture is formed. Peel strength values were determined as in Example 1 and the results are shown in Table III.

TABLE II

| SAMPLE | D (control) | E (control) | F | G | H |
|---|---|---|---|---|---|
| ELVAX 4320 | 100 | 80 | 80 | 80 | 76.4 |
| ELVAX 210[1] | - | 20 | 10 | - | - |
| AC 5120 | - | - | 10 | 20 | 19.1 |
| EPCAR 306[2] | - | - | - | - | 1.5 |
| RO 200[3] | - | - | - | - | 3.0 |

1)  Ethylene/vinyl acetate copolymer sold by DuPont.

2)  Ethylene/propylene rubber sold by F.B. Goodrich & Co.

3)  12-hydroxystearic acid sold by Oleosina

## TABLE III

|  | S A M P L E | | | | |
|  | D (control) | E (control) | F | G | H |
| --- | --- | --- | --- | --- | --- |
| PEEL STRENGTH to untreated Polyethylene at Room Temp | 105 | 163 | 227 | 263 | 249 |
| Failure mode (% cohesive) |  | 0 | 23 | 13 | 100 |
| PEEL STRENGTH to treated* Polyethylene at Room Temp | 171 |  |  |  | 99 |
| Failure mode (% cohesive) |  |  |  |  | 0 |
| PEEL STRENGTH to untreated polyethylene at 40°C |  |  |  | 62 | 85 |
| Failure mode (% cohesive) |  |  |  | 100 | 100 |

* treatment included flame brushing.

EXAMPLE 3

A blend of 32.5% by weight of Lupolene A2910M ethylene/butyl acrylate/acrylic acid terpolymer, 32.5% by weight DXM 410 ethylene/butyl acrylate copolymer, 10% by weight AC5120 ethylene/acrylic acid copolymer and 25% EPCAR 306 ethylene/propylene rubber were blended together on a sigma blade mixer until homogeneous. Peel strengths to untreated polyethylene and to polyethylene treated by abrasion, solvent degreasing and flame brushing were tested as described in Example 1 and the results obtained were as follows:

| Substrate | Peel Strength (N/25mm) | failure mode (% cohesive failure) |
|---|---|---|
| Untreated | 180 | 60 |
| Treated | 194 | 87 |

## EXAMPLE 4

The blends shown in table IV were prepared by blending the components on a sigma blade mixer until a homogeneous mixture was formed. Peel strength values between polyethylene substrates at room temperature were determined as in Example 1 and the results are shown in table IV.

## TABLE IV

| COMPONENTS | SAMPLE | |
|---|---|---|
| | J | K |
| | (Parts by weight) | |
| Ethylene acrylic acid copolymer (1) | 20 | |
| Ethylene acrylic acid copolymer (2) | | 20 |
| DXM 410 | 100 | 100 |
| Peel strength treated substrates/N(25mm)-1 | 97 | 126 |
| untreated substrates/N(25mm)-1 | 141 | 180 |

(1) number average molecular weight = 15,000
acrylic acid content 3-3.5% by weight (acid No. = 23-27
M.F.I. at 190°C = 11

(2) acrylic acid content 20.21 (acid No = 156- 164)
M.F.I. at 190°C = 300

CLAIMS:

1.    A hot-melt adhesive composition which comprises a mixture of:

(a) a copolymer of ethylene, an $\alpha,\beta$-unsaturated carboxylic acid and/or an alkyl ester thereof and, if the copolymer contains no units of the said alkyl ester, vinyl acetate, provided that if the copolymer contains vinyl acetate units it has a melt index of not more than 400; and

(b) a copolymer of ethylene and an unsaturated carboxylic acid which copolymer has an acid number of at least 4.

2.    A composition as claimed in claim 1, wherein the $\alpha,\beta$-unsaturated carboxylic acid of component (a) is acrylic acid.

3.    A composition as claimed in claim 1 or claim 2, wherein component (a) is an ethylene/vinyl acetate/ acrylic acid terpolymer, an ethylene/butyl acrylate copolymer or an ethylene/butyl acrylate/acrylic acid terpolymer.

4.    A composition as claimed in any one of claims 1 to 3, wherein the unsaturated carboxylic acid of component (b) is acrylic acid.

5. A composition as claimed in any one of claims 1 to 4, wherein the copolymer of component (b) has an acid number of at least 70.

6. A composition as claimed in any one of claims 1 to 5, wherein the copolymer of component (b) has a number average molecular weight of less than 60,000.

7. A composition as claimed in claim 6, wherein the copolymer of component (b) has a number average molecular weight in the range of from 2000 to 4000.

8. A composition as claimed in any one of claims 1 to 7, wherein the total quantity of $\alpha,\beta$-unsaturated carboxylic acid and/or alkyl ester thereof in the copolymer of component (a) is at least 0.5% by weight, based on the total weight of the copolymer of component (a).

9. An article of manufacture comprising two substrates that are bonded together by means of a composition as claimed in any one of claims 1 to 8.

10. An article as claimed in claim 9, wherein at least one of the substrates comprises polyethylene.

11. A dimensionally heat-recoverable article which has a coat of a composition as claimed in any one of claims 1 to 8 on at least part of a surface thereof.

## DOCUMENTS CONSIDERED TO BE RELEVANT

EP 82305746.8

| Category | Citation of document with indication, where appropriate, of relevant passages | Relevant to claim | CLASSIFICATION OF THE APPLICATION (Int. Cl. 3) |
|---|---|---|---|
| A | GB - A - 1 440 524 (RAYCHEM) <br> * Example 2; claims 1,17 * | 9-11 | C 09 J 3/14 <br> B 32 B 7/12 <br> B 32 B 27/32 |
| A | US - H - T 932 001 (G.E. WAPLES et al.) <br> * Abstract * | 1 | B 32 B 7/02 <br> C 08 L 23/08 <br> C 08 L 33/00 |
| A | FR - A - 1 560 635 (BASF) <br> * Page 1, column 1, lines 7-10, 24-36; column 2, lines 25-41; examples 1,6; claims 1-3 * | 1,9-11 | |
| A | US - A - 3 485 783 (A.W. KEHE et al.) <br> * Example 1; claims 1,3,5 * <br> ---- | 1 | |

TECHNICAL FIELDS SEARCHED (Int. Cl. 3)

C 09 J
B 32 B 7/00
C 08 L 23/00
C 08 L 33/00

The present search report has been drawn up for all claims

| Place of search | Date of completion of the search | Examiner |
|---|---|---|
| VIENNA | 27-01-1983 | KAHOVEC |